# EUROPÄISCHE PATENTSCHRIFT

(11) **EP 2 216 217 B1**
(45) Veröffentlichungstag und Bekanntmachung des Hinweises auf die Patenterteilung: **09.05.2012**
(21) Anmeldenummer: 10001209.5
(22) Anmeldetag: 05.02.2010
(51) Int. Cl.: B60T 7/20, B60T 11/04

(54) **Feststellbremse für einen mehrachsigen Anhänger**
Hand brake for a multiple axle trailer
Frein de stationnement pour une remorque multiaxiale

(30) Priorität: 05.02.2009 DE 102009007618
(43) Veröffentlichungstag der Anmeldung: 11.08.2010
(73) Patentinhaber: Losch Airport Equipment GmbH, 70679 Stuttgart (DE)
(72) Erfinder: Losch, Werner, 70794 Filderstadt (DE)
(74) Vertreter: Jeck, Anton

(56) Entgegenhaltungen:
- DE-A1-102007 018 445
- DE-U1-202007 010 323
- GB-A- 951 798
- US-A- 4 986 596
- US-A1- 2006 186 625

## Beschreibung

### Technisches Gebiet:

Die Erfindung betrifft eine Feststellbremse gemäß dem Oberbegriff des Anspruchs 1.

### Stand der Technik:

Gebremste Anhänger, sowohl solche mit Auflaufbremse, als auch solche mit Druckluftbremse, verfügen typischerweise über eine Feststellbremse, welche ein Wegrollen eines ohne Zugfahrzeug abgestellten Anhängers verhindern soll. Eine derartige Feststellbremse wirkt beispielsweise auf mindestens eine auch im an ein Zugfahrzeug angehängten Zustand als Fahrbremse wirkende Bremsvorrichtung, typischerweise eine Trommelbremse, ein.

Bei einem Anhänger mit Auflaufbremse wird die Feststellbremse üblicherweise durch einen an einer zum Ankuppeln an ein Zugfahrzeug vorgesehenen Deichsel angeordneten Handhebel manuell angezogen, wodurch die Bremsvorrichtung betätigt wird. Bei einer Druckluftbremse wird die Bremsvorrichtung bei Trennung von der Druckluftversorgung durch eine vorgespannte Feder automatisch angezogen.

Bei Anwendungen, bei denen ein häufiges An- und Abkuppeln unter hohem Zeitdruck erfolgt und/oder in Fällen bei denen mehrere Anhänger zu einem Zug hintereinander gekuppelt betrieben werden, beispielsweise bei Gepäckanhängern auf Flughäfen und Bahnhöfen, oder in der Landwirtschaft, ist es zu zeitaufwändig, die Feststellbremse mittels gesonderter Handgriffe manuell zu betätigen, zumal bei einem Zug die Feststellbremsen aller Anhänger betätigt werden müssten, um den Zug zuverlässig am Wegrollen zu hindern. Automatisch feststellende Druckluftbremsen würden hier zwar Abhilfe schaffen, jedoch verfügen in solchen Bereichen eingesetzte Anhänger sowohl aufgrund des hohen Wartungsaufwandes von Druckluftbremsen, als auch aufgrund des hohen Zeitaufwandes zum Lösen und Anschließen der Druckluftversorgung kaum über Druckluftbremsen. Aus Zeitmangel oder aus Nachlässigkeit kommt es deshalb häufig vor, dass ganze Züge ungenügend gegen Wegrollen gesichert sind, was zu einer erheblichen Gefährdung des Bedienpersonals und von Dritten führt.

Für die oben beschriebenen Einsatzzwecke vorgesehene Anhänger sind außerdem meist mehrachsig, überwiegend zweiachsig, ausgeführt.

Beispielsweise in der Landwirtschaft häufig eingesetzte zwei- oder dreiachsige Anhänger verfügen typischerweise über eine lenkbare Achse, die von einem um eine vertikale Dreh- bzw. Lenkachse drehbar mit dem Anhänger verbundenen Lenkschemel getragen wird. Die Räder der vorauslaufenden Achse sind dieser gegenüber unverschwenkbar angeordnet und verschwenken gemeinsam um die vertikale Drehachse des Lenkschemels, wodurch der Anhänger gelenkt wird. Eine Deichsel, mit der der Anhänger an einem Zugfahrzeug oder an einem vorauslaufenden Anhänger zu einem Zug angekuppelt werden kann, ist mit dem Lenkschemel verbunden. Die Deichsel ist mit dem Lenkschemel um eine horizontale Schwenkachse schwenkbar verbunden. Eine Feststellbremse wirkt bei solchen Anhängern typischerweise auf eines oder mehrere Räder einer starren, gegenüber dem Anhänger unverdrehbar angeordnete Achse ein. Um einen solchen Anhänger zuverlässig gegen Wegrollen zu sichern, muss die Feststellbremse mindestens ein Rad so stark gegen ein Abrollen abbremsen, vorzugsweise blockieren, um die Hangabtriebskraft zu kompensieren.

Gepäckanhänger mit Feststellbremse verfügen ebenfalls über eine um eine horizontale Schwenkachse schwenkbare Deichsel, mit der sie am Zugfahrzeug oder an einem vorauslaufenden Anhänger zu einem Zug angekuppelt werden. Die Räder der voraus- und/oder der nachlaufenden Achse sind entsprechend der lenkbaren Räder eines Kraftfahrzeugs jeweils um eigene vertikale Dreh- bzw. Lenkachsen gegenüber der jeweiligen Achse, hier der voraus- und/oder der nachlaufenden Achse, schwenk- und damit lenkbar angeordnet Eine Feststellbremse wirkt bei solchen Gepäckanhängern typischerweise auf eines oder mehrere Räder der voraus- und/oder der nachlaufenden Achse ein. Um einen solchen Anhänger zuverlässig gegen Wegrollen zu sichern, muss die Feststellbremse auch hier mindestens ein Rad so stark gegen ein Abrollen abbremsen, vorzugsweise blockieren, um die Hangabtriebskraft zu kompensieren.

Nachteilig hieran ist der verhältnismäßig hohe und damit kostenintensive Herstellungsaufwand einer solchen Feststellbremse, da es zur zuverlässigen Absicherung beispielsweise eines an einem Hang abgestellten Anhängers gegen Wegrollen erforderlich ist, mindestens ein Rad derart stark mittels der Feststellbremse abzubremsen und/oder zu blockieren, dass die Hangabtriebskraft kompensiert wird.

Durch WO 2004/096617 eine Feststellbremse für einen von Hand zu bewegenden Transportwagen bekannt. Um die Kraft möglichst leicht aufzubringen, die erforderlich ist, mindestens ein Rad derart stark mittels der Feststellbremse abzubremsen und/oder zu blockieren, dass die Hangabtriebskraft des Transportwagens kompensiert wird, hat die Feststellbremse eine um eine horizontale Achse schwenkbare Deichsel, welche zwischen zwei Positionen verschwenkbar ist. In der einen Position ist wenigsten ein Rad des Transportwagens gebremst, in der anderen Position ist das wenigstens eine Rad ungebremst. Die Deichsel kann zusätzlich um eine vertikale Achse schwenkbar sein, um den Transportwagen zu lenken. Bei dem in der einen Position der Deichsel gebremsten Rad handelt es sich um ein Hinterrad des Transportwagens.

Durch DE 10 2007 031 336 A1 ist eine andere Feststellbremse bekannt, bei der ebenfalls durch Verschwenken der Deichsel um eine horizontale Achse, beispielsweise durch Senkrechtstellen oder Fallenlassen der Deichsel, mindestens ein Rad gebremst wird. Zusätzlich ist vorgesehen, bei betätigter Bremse, wobei zumindest ein Bremsbelag an wenigstens einer Bremsfläche anliegt, Bolzen in eigens hierfür in den Bremsflächen vorgesehene Öffnungen einzutauchen, um die gebremsten Räder bei abgestelltem Wagen zu blockieren.

Eine Feststellbremse für leichte Transportwagen ist durch DE 36 05 508 A1 bekannt. Bei dieser Feststellbremse ist vorgesehen, durch Senkrechtstellen einer Deichsel die einer Achsschenkellenkung zugeordneten Räder einer Achse in entgegengesetzten Richtungen einzuschlagen, wodurch ähnlich dem Pflug beim Schifahren eine Bremswirkung erzeugt wird. Die Erzeugung einer unmittelbar auf die Räder einwirkenden Bremskraft ist hierbei nicht vorgesehen.

Durch DE 10 2007 018445 A1 ist ein mehrachsiger Anhänger mit einer Deichsel und einer an einem mit der Deichsel verbundenen und um eine vertikale Drehachse gegenüber dem Anhänger verdrehbaren Lenkschemel angeordneten Achse, sowie mit einer Bremsvorrichtung bekannt. Zum Lenken des Anhängers vermittels der an dem Lenkschemel angeordneten Achse ist hierbei vorgesehen, dass die Bremsvorrichtung nach Bedarf auf eines der beiden Räder der an dem Lenkschemel angeordneten Achse einseitig einwirkt. Das gegenüberliegende andere Rad der an dem Lenkschemel angeordneten Achse ist währenddessen frei von einer Einwirkung einer Bremsvorrichtung.

Durch US 4,986,596 ist ein mehrachsiger Anhänger mit einer um eine horizontale Achse verschwenkbaren Deichsel und einer an einem mit der Deichsel verbundenen und um eine vertikale Drehachse gegenüber dem Anhänger verdrehbaren Lenkschemel angeordneten Achse, sowie mit einer Feststellbremse bekannt.

### Technische Aufgabe der Erfindung:

Der Erfindung liegt daher die Aufgabe zugrunde, eine kostengünstig herstellbare Feststellbremse zu entwickeln, welche vorzugsweise ohne zusätzlichen Zeit- bzw. Betätigungsaufwand ein zuverlässiges Absichern eines Anhängers oder eines aus mehreren Anhängern bestehenden Zuges gegen Wegrollen ermöglicht.

### Offenbarung der Erfindung und deren Vorteile:

Die Aufgabe wird gelöst durch die Merkmale des Anspruchs 1.

Die Erfindung sieht demnach eine Feststellbremse für einen mehrachsigen Anhänger mit einer Deichsel vor. Die Feststellbremse weist mindestens eine auf mindestens ein Rad mindestens einer Achse einwirkende Bremsvorrichtung auf. Erfindungsgemäß ist vorgesehen, dass bei Betätigung der mindestens einen Bremsvorrichtung ausschließlich eine Bremsvorrichtung auf eines der beiden Räder einer an einem mit der Deichsel verbundenen und um eine vertikale Dreh- bzw. Lenkachse gegenüber dem Anhänger verdrehbaren Lenkschemel angeordneten Achse einseitig einwirkt und das gegenüberliegende andere Rad der an dem Lenkschemel angeordneten Achse frei von einer Einwirkung einer Bremsvorrichtung ist

Dadurch wird bei Betätigung der mindestens einen Bremsvorrichtung ausschließlich das auf einer ersten Seite der an dem mit der Deichsel verbundenen und um eine vertikale Dreh- bzw. Lenkachse gegenüber dem Anhänger verdrehbaren Lenkschemel angeordneten Achse angeordnete Rad abgebremst, wohingegen das auf einer der ersten Seite gegenüberliegenden zweiten Seite der an dem Lenkschemel angeordneten Achse angeordnete Rad weiterhin ungebremst ist. Dadurch stellt sich selbst bei schwächster Bremswirkung der Feststellbremse der Lenkschemel samt der mit diesem verbundenen Abse quer zur Hangabtriebskraft, wodurch beide Räder eine Bremswirkung entfalten, als ob sie beide blockiert wären. Dadurch wirkt das auf dem Lenkschemel lastende Gewicht des Anhängers der Hangabtriebskraft entgegen, und nicht nur das mit der Feststellbremse abgebremste Rad. Die Erfindung schafft somit eine Feststellbremse, bei der es ausreicht, ein Rad schwächer als eine ein Wegrollen bewirkende Hangabtriebskraft abzubremsen, um dennoch einen abgestellten Anhänger oder einen abgestellten Zug aus mehreren Anhängern zuverlässig gegen Wegrollen zu sichern. Dadurch kann eine erfindungsgemäße Feststellbremse wesentlich kostengünstiger hergestellt werden, als eine Feststellbremse nach dem Stand der Technik. Darüber hinaus ist der Wartungsaufwand für eine Erfindungsgemäße Feststellbremse wesentlich geringer, als beim Stand der Technik, da deren Funktion auch noch bei schwächster Bremswirkung sichergestellt ist

Wichtig ist hervorzuheben, dass es sich hierbei auch um eine Doppel- bzw. Zwillingsbereifung handeln kann, ohne dass vom Grundgedanken der Erfindung abgekommen wird, die Räder einer von einem Lenkschemel getragenen Achse nur einseitig zu bremsen. Selbstverständlich umfasst die Erfindung auch eine Feststellbremse für solche Anhänger, bei denen an einem Lenkschemel zwei Achsen gemeinsam angeordnet sind. Wichtig ist hierbei, dass die Erfindung in diesem Fall vorsieht, dass die Räder der beiden an dem Lenkschemel angeordneten Achsen ebenso nur einseitig gebremst werden.

Durch das Einwirken einer Bremsvorrichtung auf genau ein Rad einer an einem mit der Deichsel verbundenen Lenkschemel angeordneten Achse stellt sich bei einem beginnenden Wegrollen des Anhängers eine stabile Lage des Lenkschemels gegenüber der Richtung einer ein Wegrollen begünstigenden Kraft ein, wodurch selbst bei nur geringer Bremskraft ein Wegrollen des Anhängers z.B. an einem Hang wirkungsvoll verhindert wird. Wirkt z.B. eine nur geringer Bremskraft einseitig auf ein Rad der an einem Lenkschemel eines mehrachsigen Anhängers angeordneten Achse, so stellt sich der Lenkschemel z.B. bei einem durch eine Hangabtriebskraft begünstigten Wegrollen quer zur Richtung des Hangs, wodurch beide Räder der an dem Lenkschemel angeordneten Achse nicht mehr abrollen können und eine genau so große Bremskraft erzeugen, als ob sie beide blockiert wären. Auch in Fällen, in denen z.B. durch ein Anschlagen der Deichsel ein vollständiges Querstellen des Lenkschemels nicht möglich ist, stellt sich durch die erfindungsgemäße Feststellbremse eine stabile Lage der Lenkrichtung der am Lenkschemel angeordneten Achse und der Richtung der das Wegrollen begünstigenden Kraft ein, ähnlich der stabilen Lage eines mit back stehender Fock zum Beiliegen beigedrehten Segelboots. Auch ein Zug aus mehreren miteinander gekuppelten Anhängern kann so zuverlässig gegen Wegrollen gesichert werden, da in diesem Fall der mit einer erfindungsgemäßen Feststellbremse ausgestattete Anhänger bei beginnendem Wegrollen durch die einseitig gebremsten Räder der von dem Lenkschemel getragenen Achse in eine Richtung gelenkt wird und selbst einen Bogen beschreibt. Dadurch stellt sich der Anhänger selbst dem Rest des Zuges blockierend in den Weg. Dadurch wirkt das Gesamtgewicht des quer bzw. dem Zug im Weg stehenden Anhängers der Hangabtriebskraft entgegen, und nicht nur das mit der Feststellbremse abgebremste Rad.

Vorzugsweise umfasst die Feststellbremse zusätzlich mindestens eine auf mindestens ein Rad mindestens einer anderen Achse als der an dem Lenkschemel angeordneten Achse einwirkende Bremsvorrichtung.

Mindestens eine Bremsvorrichtung der Feststellbremse kann beispielsweise als eine Scheibenbremse mit mindestens einem gegen eine durch eine Oberfläche einer Bremsscheibe gebildete Bremsfläche pressbaren Bremsklotz, oder als eine Trommelbremse mit mindestens einem gegen eine durch eine Oberfläche einer Bremstrommel gebildete Bremsfläche pressbaren Bremsklotz ausgeführt sein. Die Bremsfläche der Feststellbremse kann gleichzeitig Bremsfläche einer Fahrbremse sein.

Die Deichsel kann um eine horizontale Schwenkachse schwenkbar mit dem Lenkschemel verbunden sein. Zusätzlich kann die Feststellbremse über Mittel zum Betätigen der mindestens einen Bremsvorrichtung durch mindestens Senkrechtstellen der Deichsel verfügen. Beim Abkuppeln stellt eine auf den Boden abgelegte Deichsel ein Verletzungsrisiko dar, da sie häufig übersehen wird und eine Stolperfalle bildet. Um die zu vermeiden und zur Einsparung Abslellfläche muss deshalb Deichsel eines abgekuppelten Anhängers manuell nach oben in die Vertikale geschwenkt werden. Um ohne zusätzlichen Zeit- bzw. Betätigungsaufwand ein zuverlässiges Absichern eines Anhängers oder eines aus mehreren Anhängern bestehenden Zuges gegen Wegrollen zu ermöglichen ist vorgesehen, einen mehrachsigen Anhänger, welcher über eine um eine horizontale Schwenkachse manuell nach oben in die Vertikale schwenkbare Deichsel zum Anhängen des Anhängers an ein Zugfahrzeug oder zum Zusammenkuppeln mit einem weiteren Anhänger zu einem Zug verfügt, mit einer Feststellbremse zu versehen, welche Feststellbremse mindestens eine auf mindestens ein Rad mindestens einer Achse einwirkende Bremsvorrichtung, sowie Mittel zum Betätigen der mindestens einen Bremsvorrichtung durch mindestens Senkrechtstellen der Deichsel und Mittel zum Blockieren mindestens eines Rades mindestens einer Achse des Anhängers zumindest bei einem beginnenden Wegrollen des Anhängers bei betätigter Bremsvorrichtung umfasst.

Vorzugsweise umfassen die Mittel zum Betätigen der mindestens einen Bremsvorrichtung durch mindestens Senkrechtstellen der Deichsel eine mit der Deichsel und mit der Bremsvorrichtung verbundene Einrichtung zur Erzeugung und Übertragung einer Zug- und/oder Druckkraft durch Verschwenken der Deichsel um die Schwenkachse.

Die Bremsvorrichtung umfasst vorzugsweise mindestens einen federbelasteten Bremsklotz sowie eine Bremsfläche, wobei der Bremsklotz bei einem Betätigen der Bremsvorrichtung durch die Federbelastung gegen die Bremsfläche anpressbar und bei einem Lösen der Bremsvorrichtung durch die Zug- und/oder Druckkraft gegen die Federbelastung von der Bremsfläche abhebbar ist. Die Zug- und/oder Druckkraft wird dabei durch ein Verschwenken der Deichsel aus einer beispielsweise senkrechten in eine vorzugsweise horizontale Stellung erzeugt. Dies hat den Vorteil eines geringen Kraftaufwandes, da die Gewichtskraft der Deichsel bei deren Absenkung zur Erzeugung zumindest eines Teils der aufzubringenden Zug- und/oder Druckkraft genutzt werden kann.

Vorzugsweise umfasst die Feststellbremse zusätzlich Mittel zum Blockieren mindestens eines Rades, auf das eine Bremsvorrichtung bei Betätigung einwirkt, zumindest bei einem beginnenden Wegrollen des Anhängers. Das Blockieren eines Rades, auf das eine Bremsvorrichtung bei Betätigung einwirkt, spätestens bei einem beginnenden Wegrollen des Anhängers stellt sicher, dass die Feststellbremse auch bei beispielsweise verschlissener Bremsvorrichtung den Anhänger zuverlässig gegen Wegrollen sichert.

Die Mittel zum Blockieren mindestens eines Rades, auf das eine Bremsvorrichtung bei Betätigung einwirkt, zumindest bei einem beginnenden Wegrollen des Anhängers, können eine Lochscheibe und/oder eine Verzahnung und/oder eine kreiszylinderförmige Walze mit mindestens einer in der kreiszylinderförmigen Mantelfläche eingearbeiteten Ausnehmung umfassen, sowie eine bei betätigter Feststellbremse mit mindestens einem Loch der Lochscheibe und/oder mit mindestens einem Zahn der Verzahnung und/oder mit der mindestens einen Ausnehmung in der kreiszylinderförmigen Mantelfläche der Walze in Eingriff bringbare Einrichtung.

Die Lochscheibe kann eine mit mindestens einem Loch versehene Bremsscheibe der Feststellbremse und/oder einer Fahrbremse sein.

Besonders bevorzugt umfassen die Mittel zum Blockieren mindestens eines Rades, auf das eine Bremsvorrichtung bei Betätigung einwirkt, zumindest bei einem beginnenden Wegrollen des Anhängers eine Verlängerung mindestens einer Schraube der Radbolzen-Nabenschrauben in Verbindung mit einer in den Drehkreis dieser mindestens einen Schraube bei Betätigung der Feststellbremse eingreifenden bzw. einbringbaren Einrichtung, so dass die mindestens eine verlängerte Schraube bei betätigter Feststellbremse und beginnendem Wegrollen gegen die Einrichtung läuft und das zugehörige Rad blockiert.

Vorzugsweise umfassen die Mittel zum Betätigen mindestens einer Bremsvorrichtung durch Senkrechtstellen der Deichsel und die Mittel zum Blockieren mindestens eines Rades, auf das eine Bremsvorrichtung bei Betätigung einwirkt, eine gemeinsame Einrichtung zur Erzeugung und Übertragung einer Zug und/oder Druckkraft durch Verschwenken der Deichsel um die Schwenkachse. Hierdurch wird diese Einrichtung zur Betätigung beider Funktionen der Feststellbremse, des Bremsens mindestens eines Rades und des Blockierens mindestens eines Rades bei einem beginnenden Wegrollen des Anhängers, nur einmalig benötigt.

Die Einrichtung zur Übertragung der Zug- und/oder Druckkraft kann als ein mit der Deichsel verbundenes Gestänge, oder als ein mit der Deichsel verbundener Bowdenzug oder als ein mit einem mittels eines mit der Deichsel in Wirkverbindung stehenden Hydraulikzylinder unter Druck setzbaren Hydraulikschlauch oder -rohr ausgeführt sein.

Die Feststellbremse kann zusätzlich zu einer Fahrbremse des mehrachsigen Anhängers vorgesehen sein.

Vorzugsweise sind zumindest Teile der Bremsvorrichtung der Feststellbremse Bestandteil einer Fahrbremse des Anhängers.

Die erfindungsgemäße Feststellbremse ist besonders bevorzugt In Verbindung mit Gepäckanhängern, wie sie beispielsweise an Flughäfen eingesetzt werden, verwendbar.

Die Erfindung wird anhand eines in den Zeichnungen dargestellten Ausführungsbeispiels näher erläutert. Es zeigen:
Fig. 1 eine schematische Darstellung eines mit einer Feststellbremse ausgestatteten mehrachsigen Anhängers mit durch horizonzal liegende Deichsel unbetätigter Feststellbremse in einer perspektivischen Ansicht von oben.
Fig. 2 den Anhänger aus Fig. 1 in einer perspektivischen Ansicht von unten.
Fig. 3 eine in Fig. 2 mit 'A' bezeichnete, die unbetätigte Feststellbremse zeigende perspektivische Detailansicht des Anhängers aus Fig. 1 von unten.
Fig. 4 den Anhänger aus Fig. 1 mit durch Senkrechtstellen der Deichsel betätigter Feststellbremse in einer perspektivischen Ansicht von oben.
Fig. 5 den Anhänger aus Fig. 4 in einer perspektivischen Ansicht von unten.
Fig. 6 eine die betätigte Feststellbremse zeigende perspektivische Detailansicht des Anhängers aus Fig. 4 von unten.
Fig. 7 den Anhänger aus Fig. 4 bei durch die Feststellbremse verhindertem Wegrollen in einer perspektivischen Ansicht von oben.
Fig. 8 den Anhänger aus Fig. 7 in einer perspektivischen Ansicht von unten.

### Wege zur Ausführung der Erfindung:

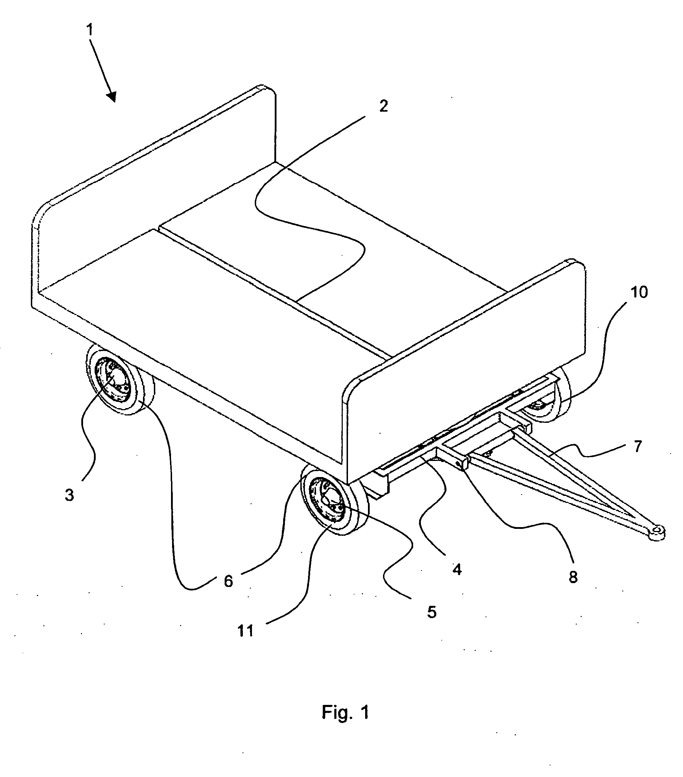

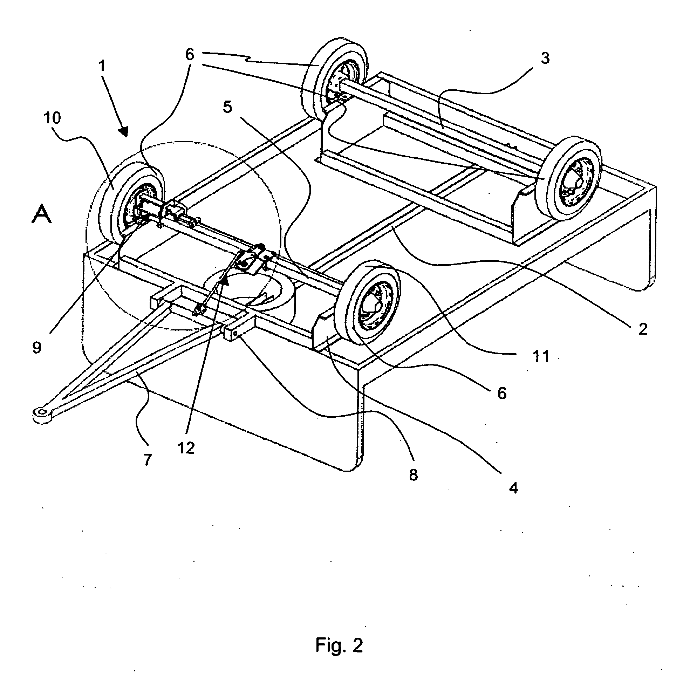

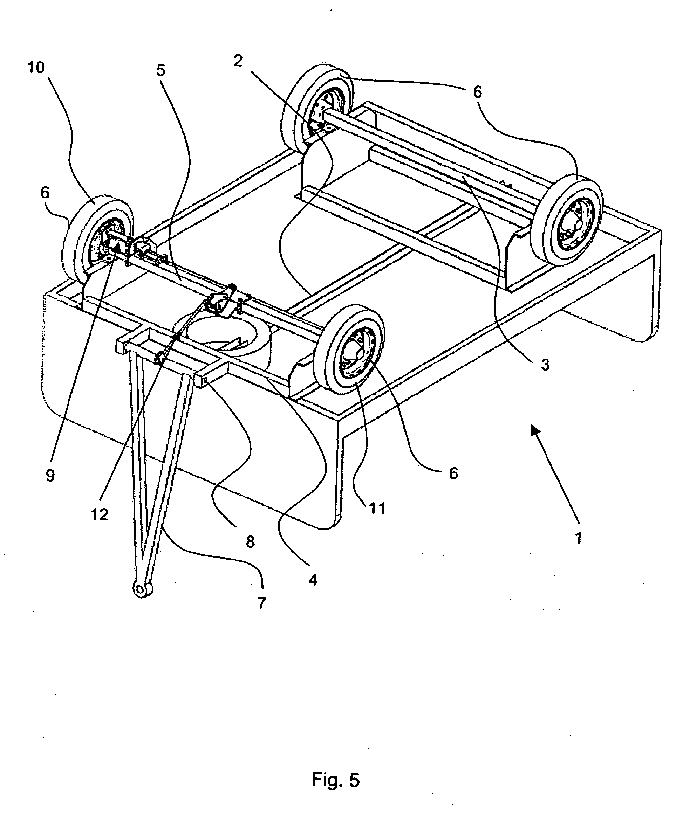

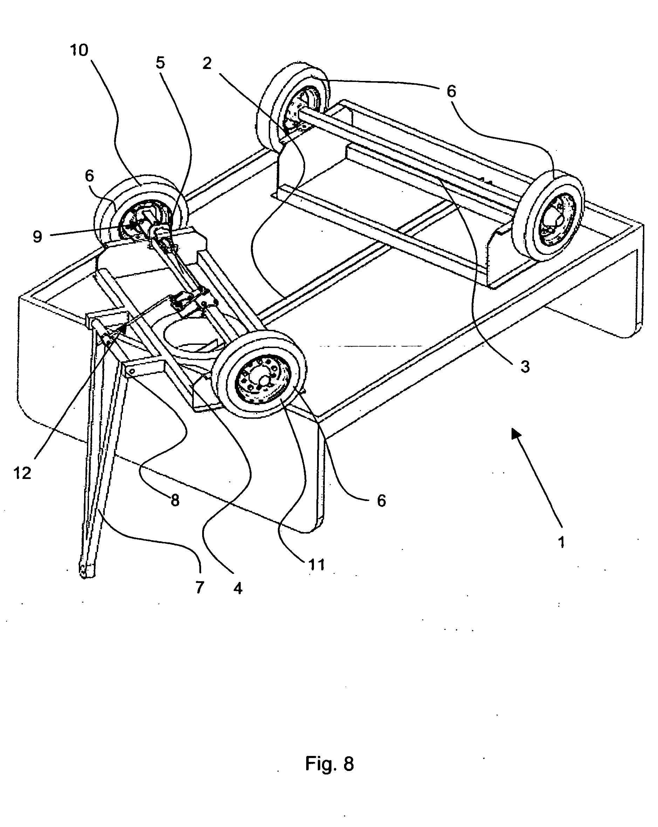

Ein in den Fig. 1 bis 8 dargestellter mehrachsiger Anhänger 1 umfasst im Wesentlichen eine starr an einem Rahmen 2 angeordnete Hinterachse 3, sowie eine an einem Lenkschemel 4 angeordnete Vorderachse 5. An der Hinterachse 3 und an der Vorderachse 5 sind Räder 6 angeordnet Der Lenkschemel 4 ist um eine vertikale Dreh- bzw. Lenkachse gegenüber dem Anhänger 1 bzw. dessen Rahmen 2 verdrehbar angeordnet. An dem Lenkschemel 4 ist eine Deichsel 7 um eine horizontale Schwenkachse 8 verschwenkbar angeordnet Der Anhänger 1 weist eine Feststellbremse mit einer Bremsvorrichtung 9 auf. Die Bremsvorrichtung 9 wirkt bei Betätigung der Feststellbremse ausschließlich auf ein Rad 10 der beiden Räder 6 der an dem mit der Deichsel 7 verbundenen und um die vertikale Dreh- bzw. Lenkachse gegenüber dem Anhänger 1 bzw. dessen Rahmen 2 verdrehbaren Lenkschemel 4 angeordneten Vorderachse 5 einseitig ein. Das gegenüberliegende andere Rad 11 der an dem Lenkschemel 4 angeordneten Vorderachse 5 ist frei von einer Einwirkung einer Bremsvorrichtung.

Die Feststellbremse kann zusätzlich zu der ausschließlich auf ein Rad 10 der beiden Räder 10, 11 der an dem mit der Deichsel 7 verbundenen und um die vertikale Dreh- bzw. Lenkachse gegenüber dem Anhänger 1 bzw. dessen Rahmen 2 verdrehbaren Lenkschemel 4 angeordneten Vorderachse 5 einseitig einwirkenden Bremsvorrichtung 9 mindestens eine auf mindestens ein Rad 6 mindestens einer anderen Achse 3 als der an dem Lenkschemel 4 angeordneten Vorderachse 5 einwirkende Bremsvorrichtung aufweisen.

Die Feststellbremse verfügt darüber hinaus über Mittel 12 zum Betätigen der Bremsvorrichtung 9 durch Senkrechtstellen der Deichsel 7.

Die Mittel 12 zum Betätigen der Bremsvorrichtungen 9 durch Senkrechtstellen der Deichsel 7 können eine mit der Deichsel 7 und mit der Bremsvorrichtung 9 verbundene Einrichtung 13 zur Erzeugung und Übertragung einer Zug- und/oder Druckkraft durch Verschwenken der Deichsel 7 um die Schwenkachse 8 umfassen. Die Einrichtung 13 zur Übertragung der Zug- und/oder Druckkraft kann als ein mit der Deichsel 7 verbundenes Gestänge 14 mit einem Schwenkhebel 15 ausgeführt sein, der die Zug- und/oder Druckkräfte aus Richtung der Deichsel 7 kommend in Richtung parallel zur Vorderachse 5 umlenkt.

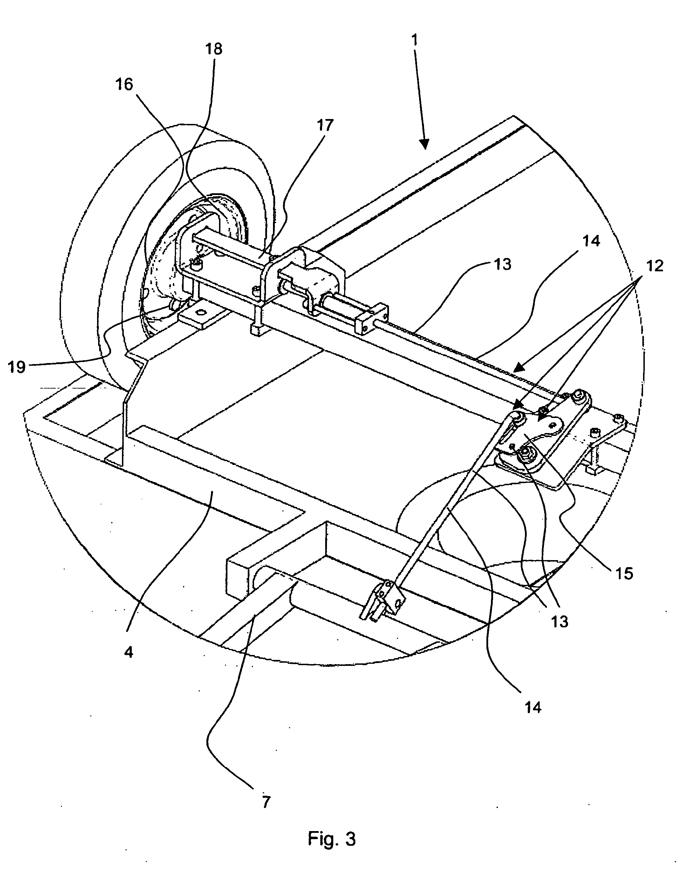

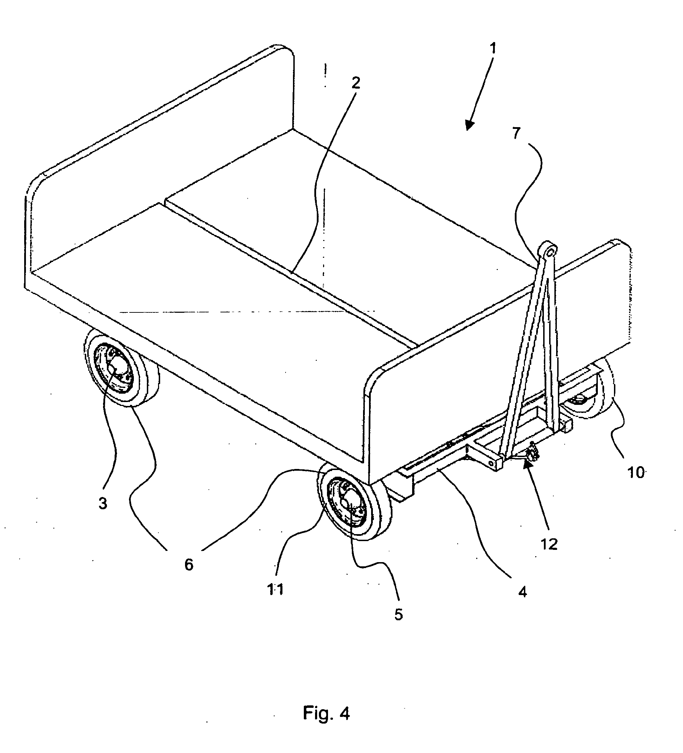

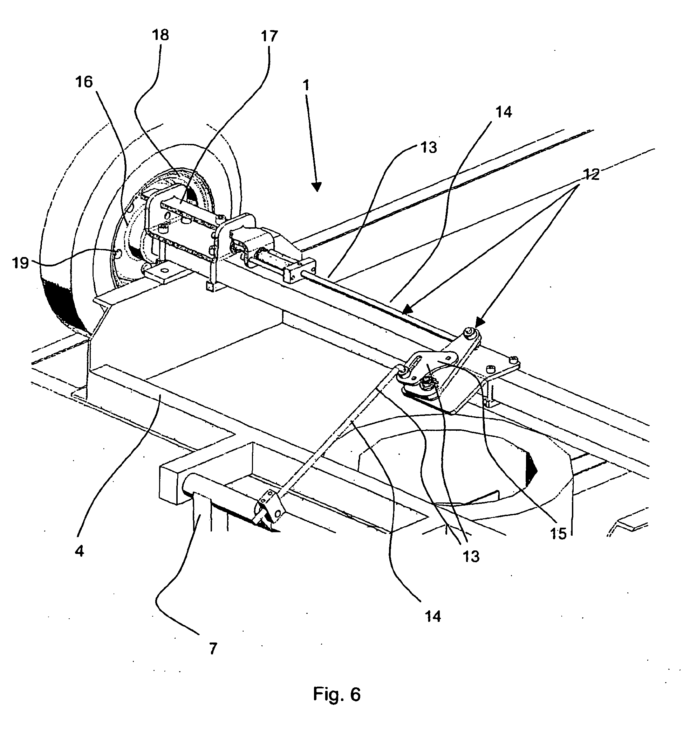

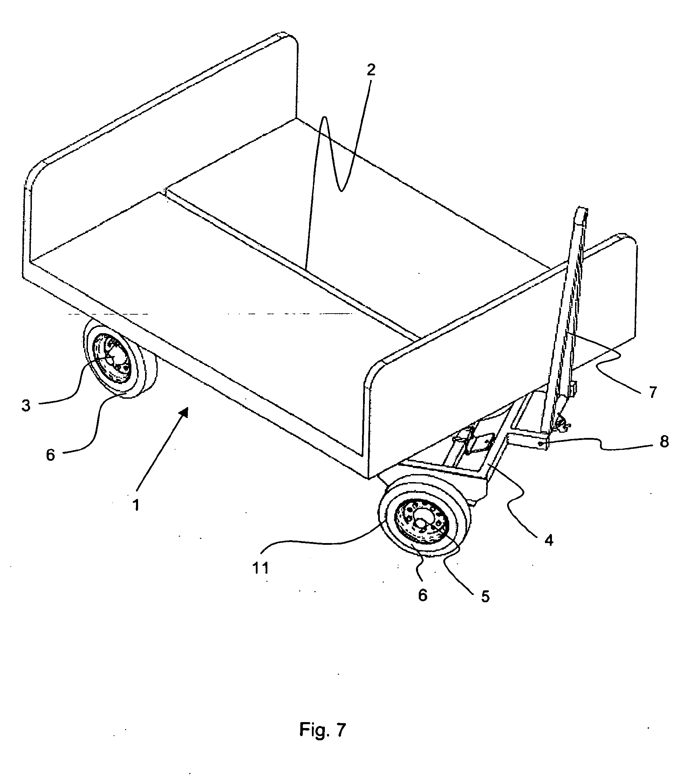

Die Bremsvorrichtung 9 der Feststellbremse kann als Scheibenbremse mit einem gegen eine durch eine Oberfläche einer Bremsscheibe 16 gebildete Bremsfläche pressbaren Bremsklotz 17 ausgeführt sein (Fig. 3, 6). Der Bremsklotz 17 kann gegen die Bremsscheibe 16 federbelastet sein. Der Bremsklotz 17 wird dann bei einem Betätigen der Bremsvorrichtung 9 durch die Federbelastung gegen die Bremsscheibe 16 angepresst und bei einem Lösen der Bremsvorrichtung 9 durch eine Zugkraft gegen die Federbelastung von der Bremsscheibe 16 abgehoben. Die Zugkraft wird dabei durch ein Verschwenken der Deichsel 7 aus einer im Wesentlichen in den Fig. 4 und 7 dargestellten senkrechten in eine in Fig. 1 dargestellte horizontale Stellung erzeugt. Dies hat den Vorteil eines geringen Kraftaufwandes, da die Gewichtskraft der Deichsel 7 bei deren Absenkung zur Erzeugung zumindest eines Teils der aufzubringenden Zugkraft genutzt werden kann. Die Bremsfläche bzw. die Bremsscheibe 16 kann integraler Bestandteil einer Felge 18 des Rads 10 sein.

Die Feststellbremse kann zusätzlich Mittel zum Blockieren mindestens eines Rads 10, auf das die Bremsvorrichtung 9 bei Betätigung einwirkt, zumindest bei einem beginnenden Wegrollen des Anhängers 1 umfassen. Das Blockieren des Rads 10 spätestens bei einem beginnenden Wegrollen des Anhängers, auf welches Rad 10 die Bremsvorrichtung 9 bei Betätigung einwirkt, stellt sicher, dass die Feststellbremse auch bei beispielsweise verschlissener Bremsvorrichtung 9 den Anhänger 1 zuverlässig gegen Wegrollen sichert.

Die Mittel zum Blockieren mindestens eines Rads 10, auf das die Bremsvorrichtung 9 bei Betätigung einwirkt, umfassen vorzugsweise die selbe Einrichtung 13 zur Erzeugung und Übertragung einer Zug- und/oder Druckkraft durch Verschwenken der Deichsel 7 um die Schwenkachse 8, wie die Bremsvorrichtung 9, sowie mindestens eine mit dieser Einrichtung 13 verbundene bzw. zumindest in Wirkverbindung stehende auf das Rad 10 einwirkende, nicht näher dargestellte Biockienrorrichtung. Dadurch umfassen die Mittel 12 zum Betätigen der Bremsvorrichtung 9 durch Senkrechtstellen der Deichsel 7 und die Mittel zum Blockieren des Rads 10, auf das die Bremsvorrichtung 9 bei Betätigung einwirkt, eine gemeinsame Einrichtung 13 zur Erzeugung und Übertragung einer Zug- und/oder Druckkraft durch Verschwenken der Deichsel um die Schwenkachse. Hierdurch wird diese Einrichtung 13 zur Betätigung beider Funktionen der Feststellbremse gemäß diesen Beispiels, des Bremsens des Rades 10 und des Blockierens des Rads 10 bei einem beginnenden Wegrollen des Anhängers 1, nur einmalig benötigt.

Die Blockiervorrichtung kann mit einem vorzugsweise in dem Bremsklotz 17 der Bremsvorrichtung 9 angeordneten Blockierbolzen ausgeführt sein, der gegen eine ihm gegenüber liegende, mit dem Rad 10 des Anhängers 1 mitdrehende Fläche, z.B. der Bremsscheibe 16, verschiebbar und federbelastet ist, sowie mit mindestens einer in der Fläche angeordneten, mit dem Blockierbolzen korrespondierenden Ausnehmung 19 (Fig. 3 und 6). Dabei kann der Blockierbolzen bei betätigter Bremsvorrichtung 9 durch die Federbelastung gegen die Fläche angepresst werden und zumindest bei einem beginnenden Wegrollen des Anhängers 1 beim Passieren einer korrespondierenden Ausnehmung 19 in die Ausnehmung 19 hineinfahren. Der Blockierbolzen kann bei einem Lösen der Bremsvorrichtung 9 durch die Zug- und/oder Druckkraft gegen die Federbelastung von der beispielsweise durch die Bremsscheibe 16 gebildeten Fläche abgehoben werden bzw. aus der Ausnehmung 19 herausgezogen werden. Auch hier wird die Zug- und/oder Druckkraft durch ein Verschwenken der Deichsel 7 aus einer senkrechten in eine horizontale Stellung erzeugt. Dies hat den Vorteil eines geringen Kraftaufwandes, da die Gewichtskraft der Deichsel 7 bei deren Absenkung zur Erzeugung zumindest eines Teils der aufzubringenden Zug- und/oder Druckkraft genutzt werden kann. Bei der dem Blockierbolzen gegenüberliegenden Fläche handelt es sich vorzugsweise um die durch eine Oberfläche einer Bremsscheibe oder einer Bremstrommel der Bremsvorrichtung 9 gebildete Bremsfläche.

Der Blockierbolzen kann beispielsweise koaxial zu dem Bremsklotz 17 der Bremsvorrichtung 9 angeordnet sein.

Der Blockierbolzen kann gegenüber dem Bremsklotz 17 federbelastet verschiebbar angeordnet sein, wobei der Blockierbolzen durch Betätigung der Bremsvorrichtung 9 durch die Federbelastung gegen eine Bremsfläche der Bremsscheibe 16 anpressbar ist, in welcher die Ausnehmung 19, in die der Blockierbolzen zumindest bei einem beginnenden Wegrollen des Anhängers 1 einrasten kann, angeordnet ist.

Wichtig ist hervorzuheben, dass zumindest Teile der Bremsvorrichtungen 9 der Feststellbremse Bestandteil einer Fahrbremse des Anhängers 1 sein können.

### Gewerbliche Anwendbarkeit:

Die Erfindung ist insbesondere im Bereich der Herstellung und des Betriebs von Anhängern gewerblich anwendbar.

### Bezugszahlenliste

- 1: Anhänger
- 2: Rahmen
- 3: Hinterachse
- 4: Lenkschemel
- 5: Vorderachse
- 6: Rad
- 7: Deichsel
- 8: Schwenkachse
- 9: Bremsvorrichtung
- 10: Rad
- 11: Rad
- 12: Mittel
- 13: Einrichtung
- 14: Gestänge
- 15: Schwenkhebel
- 16: Bremsscheibe
- 17: Bremsklotz
- 18: Felge
- 19: Ausnehmung

## Patentansprüche

1. Feststellbremse für einen mehrachsigen Anhänger (1) mit einer Deichsel (7), umfassend mindestens eine auf mindestens ein Rad (6, 10, 11) mindestens einer Achse (3, 5) einwirkende Bremsvorrichtung (9),
**dadurch gekennzeichnet,**
**dass** bei Betätigung der mindestens einen Bremsvorrichtung (9) ausschließlich eine Bremsvorrichtung (9) auf eines der beiden Räder (10) einer an einem mit der Deichsel (7) verbundenen und um eine vertikale Dreh- bzw. Lenkachse gegenüber dem Anhänger (1) verdrehbaren Lenkschemel (4) angeordneten Achse (5) einseitig einwirkt und das gegenüberliegende andere Rad (11) der an dem Lenkschemel (4) angeordneten Achse (5) frei von einer Einwirkung einer Bremsvorrichtung (9) ist, so dass sich bei einem beginnenden Wegrollen des Anhängers eine stabile Lage des Lenkschemels gegenüber der Richtung einer ein Wegrollen begünstigenden Kraft einstellt, wodurch selbst bei nur geringer Bremskraft ein Wegrollen des Anhängers verhindert wird.

2. Feststellbremse nach Anspruch 1,
**dadurch gekennzeichnet,**
**dass** die Feststellbremse zusätzlich mindestens eine auf mindestens ein Rad (6) mindestens einer anderen Achse (3) als der an dem Lenkschemel (4) angeordneten Achse (5) einwirkende Bremsvorrichtung (9) umfasst.

3. Feststellbremse nach Anspruch 1 oder 2,
**dadurch gekennzeichnet,**
**dass** mindestens eine Bremsvorrichtung (9) der Feststellbremse als eine Scheibenbremse mit mindestens einem gegen eine durch eine Oberfläche einer Bremsscheibe (16) gebildete Bremsfläche pressbaren Bremsklotz (17) ausgeführt ist.

4. Feststellbremse nach Anspruch 1 oder 2,
**dadurch gekennzeichnet,**
**dass** mindestens eine Bremsvorrichtung (9) der Feststellbremse als eine Trommelbremse mit mindestens einem gegen eine durch eine Oberfläche einer Bremstrommel gebildete Bremsfläche pressbaren Bremsklotz ausgeführt ist.

5. Feststellbremse nach Anspruch 3 oder 4,
**dadurch gekennzeichnet,**
**dass** die Bremsfläche der Feststellbremse gleichzeitig Bremsfläche einer Fahrbremse ist.

6. Feststellbremse nach einem der vorhergehenden Ansprüche,
**dadurch gekennzeichnet,**
**dass** die Deichsel um eine horizontale Schwenkachse (8) schwenkbar mit dem Lenkschemel verbunden ist.

7. Feststellbremse nach Anspruch 6,
**gekennzeichnet durch**
Mittel (12) zum Betätigen der mindestens einen Bremsvorrichtung (9) **durch** mindestens Senkrechtstellen der Deichsel (7).

8. Feststellbremse nach Anspruch 7,
**dadurch gekennzeichnet,**
**dass** die Mittel (12) zum Betätigen der Bremsvorrichtung (9) durch mindestens Senkrechtstellen der Deichsel (7) eine mit der Deichsel (7) und mit der Bremsvorrichtung (9) verbundene Einrichtung (13) zur Erzeugung und Übertragung einer Zug- und/oder Druckkraft durch Verschwenken der Deichsel (7) um die Schwenkachse (8), umfassen.

9. Feststellbremse nach Anspruch 8,
**dadurch gekennzeichnet,**
**dass** die Bremsvorrichtung (9) mindestens einen federbelasteten Bremsklotz (17) sowie eine Bremsfläche (16) umfasst, wobei der Bremsklotz (17) bei einem Betätigen der Bremsvorrichtung (9) durch die Federbelastung gegen die Bremsfläche (16) anpressbar und bei einem Lösen der Bremsvorrichtung (9) durch die Zug- und/oder Druckkraft gegen die Federbelastung von der Bremsfläche (16) abhebbar ist.

10. Feststellbremse nach einem der vorhergehenden Ansprüche,
**dadurch gekennzeichnet,**
**dass** die Feststellbremse zusätzlich Mittel zum Blockieren mindestens eines Rades (6, 10), auf das eine Bremsvorrichtung bei Betätigung einwirkt, zumindest bei einem beginnenden Wegrollen des Anhängers (1) umfasst.

11. Feststellbremse nach Anspruch 10,
**dadurch gekennzeichnet,**
**dass** die Mittel zum Blockieren mindestens eines Rades, auf das eine Bremsvorrichtung bei Betätigung einwirkt, zumindest bei einem beginnenden Wegrollen des Anhängers, eine Lochscheibe und/oder eine Verzahnung und/oder eine kreiszylinderförmige Walze mit mindestens einer in der kreiszylinderförmigen Mantelfläche eingearbeiteten Ausnehmung, sowie eine bei betätigter Feststellbremse mit mindestens einem Loch der Lochscheibe und/oder mit mindestens einem Zahn der Verzahnung und/oder mit der mindestens einen Ausnehmung in der kreiszylinderförmigen Mantelfläche der Walze in Eingriff bringbare Einrichtung umfasst.

12. Feststellbremse nach Anspruch 11,
**dadurch gekennzeichnet,**
**dass** die Lochscheibe eine mit mindestens einem Loch versehene Bremsscheibe (16) der Feststellbremse und/oder einer Fahrbremse ist.

13. Feststellbremse nach Anspruch 10,
**dadurch gekennzeichnet,**
**dass** die Mittel zum Blockieren mindestens eines Rades, auf das eine Bremsvorrichtung bei Betätigung einwirkt, zumindest bei einem beginnenden Wegrollen des Anhängers eine Verlängerung mindestens einer Schraube der Radbolzen-Nabenschrauben in Verbindung mit einer in den Drehkreis dieser mindestens einen Schraube bei Betätigung der Feststellbremse einbringbaren Einrichtung umfassen.

14. Feststellbremse nach einem der Ansprüche 10 bis 13,
**dadurch gekennzeichnet,**
**dass** die Mittel (12) zum Betätigen mindestens einer Bremsvorrichtung (9) durch mindestens Senkrechtstellen der Deichsel (7) und die Mittel zum Blockieren mindestens eines Rades (6, 10), auf das eine Bremsvorrichtung (9) bei Betätigung einwirkt, eine gemeinsame Einrichtung (13) zur Erzeugung und Übertragung einer Zug- und/oder Druckkraft durch Verschwenken der Deichsel (7) um eine horizontale Schwenkachse (8) umfassen.

15. Feststellbremse nach einem der Ansprüche 8, 9 oder 14,
**dadurch gekennzeichnet,**
**dass** die Einrichtung (13) zur Erzeugung und Übertragung einer Zug- und/oder Druckkraft durch Verschwenken der Deichsel (7) um die Schwenkachse (8) ein mit der Deichsel verbundenes Gestänge (14, 15) umfassen.

16. Feststellbremse nach einem der Ansprüche 8, 9 oder 14,
**dadurch gekennzeichnet,**
**dass** die Einrichtung (13) zur Erzeugung und Übertragung der Zug- und/oder Druckkraft durch Verschwenken der Deichsel (7) um die Schwenkachse (8) einen mit der Deichsel verbundenen Bowdenzug umfassen.

17. Feststellbremse nach einem der Ansprüche 8, 9 oder 14,
**dadurch gekennzeichnet,**
**dass** die Einrichtung (13) zur Erzeugung und Übertragung der Zug- und/oder Druckkraft durch Verschwenken der Deichsel (7) um die Schwenkachse (8) einen mit einem mittels eines mit der Deichsel (7) in Wirkverbindung stehenden Hydraulikzylinder unter Druck setzbaren Hydraulikfluid gefüllten Hydraulikschlauch umfassen.

18. Feststellbremse nach einem der vorhergehenden Ansprüche,
**dadurch gekennzeichnet,**
**dass** die Feststellbremse zusätzlich zu einer Fahrbremse des mehrachsigen Anhängers vorgesehen ist.

19. Feststellbremse nach einem der vorhergehenden Ansprüche,
**dadurch gekennzeichnet,**
**dass** zumindest Teile der Bremsvorrichtung (9) der Feststellbremse Bestandteil einer Fahrbremse des Anhängers (1) sind.

20. Feststellbremse nach einem der vorhergehenden Ansprüche,
**gekennzeichnet durch**
eine Verwendung bei einem Gepäckanhänger.

## Claims

1. A hand brake for a multiple-axle trailer (1) having a drawbar (7), including at least one braking device (9) acting on at least one wheel (6, 10, 11) of at least one axle (3, 5), **characterized in that**
upon actuation of the at least one braking device (9), only one braking device (9) acts unilaterally on one of the two wheels (10) of an axle (5) disposed on a steering bogie (4), the steering bogie being connected to the drawbar (7) and being rotatable about a vertical rotary or steering axis relative to the trailer (1), and the opposed other wheel (11) of the axle (5) disposed on the steering bogie (4) is free of an action of a braking device (9), so that upon incipient rolling of the trailer, a stable position of the steering bogie relative to the direction of a force that promotes the rolling is established, and as a result, even at only a slight braking force, rolling of the trailer is prevented.

2. The hand brake as defined by claim 1,
**characterized in that**
the hand brake additionally includes at least one braking device (9) acting on at least one wheel (6) of at least one axle (3) other than the axle (5) disposed on the steering bogie (4).

3. The hand brake as defined by claim 1 or 2,
**characterized in that**
at least one braking device (9) of the hand brake is embodied as a disk brake having at least one brake pad (17) that can be pressed against a braking area formed by a surface of a brake disk (16).

4. The hand brake as defined by claim 1 or 2,
**characterized in that**
at least one braking device (9) of the hand brake is embodied as a drum brake having at least one brake shoe that can be pressed against a braking area formed by a surface of a brake drum.

5. The hand brake as defined by claim 3 or 4,
**characterized in that**
the braking area of the hand brake is simultaneously the braking area of a service brake.

6. The hand brake as defined by one of the foregoing claims,
**characterized in that**
the drawbar is connected to the steering bogie pivotably about a horizontal pivot pin (8).

7. The hand brake as defined by claim 6,
**characterized by**
means (12) for actuating the at least one braking device (9) by positioning the drawbar (7) at least upright.

8. The hand brake as defined by claim 7,
**characterized in that**
the means (12) for actuating the at least one braking device (9) by positioning the drawbar (7) at least upright include a device (13), connected to the drawbar (7) and to the braking device (9), for generating and transmitting a tensile and/or compressive force by pivoting the drawbar (7) about the pivot pin (8).

9. The hand brake as defined by claim 8,
**characterized in that**
the braking device (9) includes at least one spring-loaded brake pad (17) and a braking surface (16), and upon an actuation of the braking device (9) the brake pad (17) can be pressed against the braking surface (16) by means of the spring-loading, and upon a release of the braking device (9) the brake pad can be lifted from the braking surface (16) counter to the spring-loading by means of the tensile and/or compressive force.

10. The hand brake as defined by one of the foregoing claims,
**characterized in that**
the hand brake additionally includes means for locking at least one wheel (6, 10), on which a braking device acts upon actuation, at least upon incipient rolling of the trailer (1).

11. The hand brake as defined by claim 10,
**characterized in that**
the means for locking at least one wheel, on which a braking device acts upon actuation, at least upon incipient rolling of the trailer include a perforated disk and/or a set of teeth and/or a circular-cylindrical roller having at least one recess machined into the circular-cylindrical jacket face, and also include a device that when the hand brake is actuated can be brought into engagement with at least one hole of the perforated disk and/or with at least one tooth of the set of teeth and/or with the at least one recess in the circular-cylindrical jacket face.

12. The hand brake as defined by claim 11,
**characterized in that**
the perforated disk is a brake disk (16) of the hand brake which is provided with at least one hole and/or is a service brake.

13. The hand brake as defined by claim 10,
**characterized in that**
the means for locking at least one wheel, on which a braking device acts upon actuation, at least upon incipient rolling of the trailer include an extension of at least one screw of the wheel bolt/hub screws, in combination with a device that upon actuation of the hand brake can be introduced into the circle of rotation of this at least one screw.

14. The hand brake as defined by one of claims 10-13,
**characterized in that**
the means (12) for actuating at least one braking device (9) by positioning the drawbar (7) at least upright and the means for locking at least one wheel (6, 10), on which a braking device (9) acts upon actuation, include a common device (13) for generating and transmitting a tensile and/or compressive force by pivoting the drawbar (7) about a horizontal pivot pin (8).

15. The hand brake as defined by one of claims 8, 9 or 14,
**characterized in that**
the device (13) for generating and transmitting a tensile and/or compressive force by pivoting the drawbar (7) about the pivot pin (8) include a linkage (14, 15) connected to the drawbar.

16. The hand brake as defined by one of claims 8, 9 or 14,
**characterized in that**
the device (13) for generating and transmitting the tensile and/or compressive force by pivoting the drawbar (7) about the pivot pin (8) include a Bowden cable connected to the drawbar.

17. The hand brake as defined by one of claims 8, 9 or 14,
**characterized in that**
the device (13) for generating and transmitting the tensile and/or compressive force by pivoting the drawbar (7) about the pivot pin (8) include a hydraulic hose filled with a hydraulic fluid that can be put under pressure by means of a hydraulic cylinder operatively connected to the drawbar (7).

18. The hand brake as defined by one of the foregoing claims,
**characterized in that**
the hand brake is provided in addition to a service brake of the multiple-axle trailer.

19. The hand brake as defined by one of the foregoing claims,
**characterized in that**
at least some parts of the braking device (9) of the hand brake are a component of a service brake of the trailer (1).

20. The hand brake as defined by one of the foregoing claims,
**characterized by**
a use in a baggage trailer.

## Revendications

1. Frein d'immobilisation dévolu à une remorque (1) à essieux multiples munie d'un timon (7), incluant au moins un dispositif de freinage (9) agissant sur au moins une roue (6, 10, 11) d'au moins un essieu (3, 5),
**caractérisé par le fait**
**que**,
lors d'un actionnement du dispositif de freinage (9) à présence minimale, une action unilatérale est exercée exclusivement par un dispositif de freinage (9) sur l'une (10) des deux roues d'un essieu (5) implanté sur un châssis de braquage (4) relié au timon (7) et apte à tourner, vis-à-vis de la remorque (1), autour d'un axe vertical respectif de rotation ou de braquage, et l'autre roue (11), tournée à l'opposé sur ledit essieu (5) implanté sur ledit châssis de braquage (4), n'est pas soumise à l'action d'un dispositif de freinage (9), de sorte qu'il s'instaure, au stade initial d'un roulement intempestif de la remorque, une position stable dudit châssis de braquage par rapport à la direction d'une force propice à un roulement intempestif, ce qui a pour effet d'empêcher un roulement intempestif de ladite remorque, même en présence d'une force de freinage seulement modeste.

2. Frein d'immobilisation selon la revendication 1,
**caractérisé par le fait**
**que** ledit frein d'immobilisation est additionnellement pourvu d'au moins un dispositif de freinage (9), qui agit sur au moins une roue (6) d'au moins un essieu (3) autre que l'essieu (5) implanté sur le châssis de braquage (4).

3. Frein d'immobilisation selon la revendication 1 ou 2,
**caractérisé par le fait**
**qu'**au moins un dispositif de freinage (9) dudit frein d'immobilisation est réalisé sous la forme d'un frein à disque, doté d'au moins un sabot de freinage (17) pouvant être pressé contre une surface de freinage matérialisée par une surface d'un disque de freinage (16).

4. Frein d'immobilisation selon la revendication 1 ou 2,
**caractérisé par le fait**
**qu'**au moins un dispositif de freinage (9) dudit frein d'immobilisation est réalisé sous la forme d'un frein à tambour, doté d'au moins un sabot de freinage pouvant être pressé contre une surface de freinage matérialisée par une surface d'un tambour de freinage.

5. Frein d'immobilisation selon la revendication 3 ou 4,
**caractérisé par le fait**
**que** la surface de freinage dudit frein d'immobilisation constitue, simultanément, une surface de freinage d'un frein de marche.

6. Frein d'immobilisation selon l'une des revendications précédentes, **caractérisé par le fait**
**que** le timon est relié au châssis de braquage avec faculté de pivotement autour d'un axe horizontal de pivotement (8).

7. Frein d'immobilisation selon la revendication 6,
**caractérisé par**
des moyens (12) dédiés à l'actionnement du dispositif de freinage (9) à présence minimale, au moins par positionnement du timon (7) à la verticale.

8. Frein d'immobilisation selon la revendication 7,
**caractérisé par le fait**
**que** les moyens (12) affectés à l'actionnement du dispositif de freinage (9), au moins par positionnement du timon (7) à la verticale, comportent un système (13) relié audit timon (7) et audit dispositif de freinage (9) en vue de la génération et de la transmission d'une force de traction et/ou de pression, par pivotement imprimé audit timon (7) autour de l'axe de pivotement (8).

9. Frein d'immobilisation selon la revendication 8,
**caractérisé par le fait**
**que** le dispositif de freinage (9) comprend au moins un sabot de freinage (17) contraint élastiquement, ainsi qu'une surface de freinage (16), ledit sabot de freinage (17) pouvant être pressé contre la surface de freinage (16) lors d'un actionnement du dispositif de freinage (9), sous l'effet de la contrainte élastique, et dissocié d'avec ladite surface de freinage (16) lors d'une neutralisation dudit dispositif de freinage (9), sous l'effet de la force de traction et/ou de pression, en opposition à ladite contrainte élastique.

10. Frein d'immobilisation selon l'une des revendications précédentes, **caractérisé par le fait**
**que** ledit frein d'immobilisation est additionnellement pourvu de moyens affectés au blocage d'au moins une roue (6, 10) sur laquelle un dispositif de freinage agit en cas d'actionnement, au moins au stade initial d'un roulement intempestif de la remorque (1).

11. Frein d'immobilisation selon la revendication 10,
**caractérisé par le fait**
**que** les moyens, affectés au blocage d'au moins une roue sur laquelle un dispositif de freinage agit en cas d'actionnement, au moins au stade initial d'un roulement intempestif de la remorque, comprennent un disque perforé et/ou une denture et/ou un rouleau de forme cylindrique droite offrant au moins un évidement ménagé dans la surface périphérique de forme cylindrique droite, ainsi qu'un système pouvant être mis en prise, à l'état actionné dudit frein d'immobilisation, avec au moins une perforation dudit disque perforé et/ou avec au moins une dent de ladite denture et/ou avec ledit évidement à présence minimale, ménagé dans ladite surface périphérique dudit rouleau dotée d'une forme cylindrique droite.

12. Frein d'immobilisation selon la revendication 11,
**caractérisé par le fait**
**que** le disque perforé se présente comme un disque de freinage (16) dudit frein d'immobilisation et/ou d'un frein de marche, muni d'au moins une perforation.

13. Frein d'immobilisation selon la revendication 10,
**caractérisé par le fait**
**que** les moyens, affectés au blocage d'au moins une roue sur laquelle un dispositif de freinage agit en cas d'actionnement, au moins au stade initial d'un roulement intempestif de la remorque, comportent un prolongement d'au moins un boulon, parmi les boulons de roues-boulons de moyeux, en association avec un système pouvant être amené dans la circonférence de rotation de ce boulon, à présence minimale, lors d'un actionnement dudit frein d'immobilisation.

14. Frein d'immobilisation selon l'une des revendications 10 à 13,
**caractérisé par le fait**
**que** les moyens (12), affectés à l'actionnement d'au moins un dispositif de freinage (9) au moins par positionnement du timon (7) à la verticale, et les moyens, affectés au blocage d'au moins une roue (6, 10) sur laquelle un dispositif de freinage (9) agit en cas d'actionnement, comportent un système commun (13) dévolu à la génération et à la transmission d'une force de traction et/ou de pression, par pivotement imprimé audit timon (7) autour d'un axe horizontal de pivotement (8).

15. Frein d'immobilisation selon l'une des revendications 8, 9 ou 14, **caractérisé par le fait**
**que** le système (13), dévolu à la génération et à la transmission d'une force de traction et/ou de pression par pivotement imprimé au timon (7) autour de l'axe de pivotement (8), inclut une tringlerie (14, 15) reliée audit timon.

16. Frein d'immobilisation selon l'une des revendications 8, 9 ou 14, **caractérisé par le fait**
**que** le système (13), dévolu à la génération et à la transmission de la force de traction et/ou de pression par pivotement imprimé au timon (7) autour de l'axe de pivotement (8), inclut un câble Bowden relié audit timon.

17. Frein d'immobilisation selon l'une des revendications 8, 9 ou 14, **caractérisé par le fait**
**que** le système (13), dévolu à la génération et à la transmission de la force de traction et/ou de pression par pivotement imprimé au timon (7) autour de l'axe de pivotement (8), inclut un tuyau souple hydraulique empli d'un fluide hydraulique pouvant être pressurisé au moyen d'un vérin hydraulique en liaison opérante avec ledit timon (7).

18. Frein d'immobilisation selon l'une des revendications précédentes, **caractérisé par le fait**
**que** ledit frein d'immobilisation est prévu en plus d'un frein de marche de la remorque à essieux multiples.

19. Frein d'immobilisation selon l'une des revendications précédentes, **caractérisé par le fait**
**qu'**au moins des éléments du dispositif de freinage (9) dudit frein d'immobilisation font partie intégrante d'un frein de marche de la remorque (1).

20. Frein d'immobilisation selon l'une des revendications précédentes, **caractérisé par**
une utilisation dans un wagonnet de transport de bagages.
